# EUROPÄISCHE PATENTSCHRIFT

(11) **EP 0 849 319 B1**
(45) Veröffentlichungstag und Bekanntmachung des Hinweises auf die Patenterteilung: **26.03.2003**
(21) Anmeldenummer: 97122140.3
(22) Anmeldetag: 16.12.1997
(51) Int. Cl.: C08K 9/06

(54) **Verfahren zum Deaggregieren von Kieselsäure**
Process for desaggregating silica
Procédé de désagrégation de silice

(30) Priorität: 21.12.1996 DE 19653992
(43) Veröffentlichungstag der Anmeldung: 24.06.1998
(73) Patentinhaber: Degussa AG, 40474 Düsseldorf (DE)
(72) Erfinder: Schöley, Peter, 01612 Nünchritz (DE); Winkler, Ralf, Dr. rer. nat., 01445 Radebeul (DE); Schickmann, Harald, 01662 Meissen (DE)
(74) Vertreter: Weber, Wolfgang, Dr

(56) Entgegenhaltungen:
- EP-A- 0 462 032
- FR-A- 2 320 324
- GB-A- 2 284 609
- GB-A- 2 287 248

## Beschreibung

Die Erfindung betrifft ein Verfahren zum Deaggregieren von hochdisperser Kieselsäure, wobei durch extrem starke mechanische Belastung mittlere Teilchengrößen kleiner 100 nm, vorzugsweise kleiner 50 nm, erzielt werden. Die deaggregierte Kieselsäure wird als Füllstoff in Siliconkautschuk-Mischungen eingesetzt.

Für hochdisperse Kieselsäuren, welche nach pyrogenen oder naßchemischen Verfahren hergestellt werden, sind vielfältige-Einsatzmöglichkeiten bekannt. Ein Hauptanwendungsgebiet besteht darin, diese Produkte als sogenannte verstärkende oder aktive Füllstoffe in Siliconkautschukmischungen einzusetzen. Diese Siliconkautschuk-Mischungen bestehen im Wesentlichen aus Polydimethylsiloxanen, die über eine ausreichende Zahl reaktiver Gruppen verfügen, um mit Hilfe von vernetzend wirkenden Substanzen und gegebenenfalls Katalysatoren die Siliconkautschukmischung in einen gummielastischen Zustand zu überführen, und den genannten pyrogenen Kieselsäuren, die üblicherweise BET-Oberflächen von mindestens 50 m²/g aufweisen. Je nach Art der Vernetzung wird beispielsweise in bei Raumtemperatur vernetzende Ein- oder Zwei-Komponenten-Systeme (RTV1, RTV2) sowie in hochtemperaturvernetzende (HTV) Systeme unterschieden.

Unabhängig von der Art der Vernetzung werden die Produkteigenschaften aller Systeme durch die eingesetzte Kieselsäure entscheidend mitbestimmt. Dabei sind für die Produktkennwerte sowohl der unvernetzten Siliconkautschuk-Mischung als auch des fertigen Elastomeren neben der Größe der spezifischen Oberfläche der Kieselsäure vor allem deren Oberflächenbehandlung und die Verteilung der Kieselsäure in der Polysiloxanmatrix von Bedeutung.

Die Größe der Kiesesäure-Oberfläche ist während der Mischungsherstellung nur in engen Grenzen variierbar. Die Oberflächenbehandlung der Kieselsäure kann dagegen sowohl während als auch nach ihrer Einarbeitung in das Polysiloxan in unterschiedlicher Intensität erfolgen. Dabei werden auf der Kieselsäure gebundene Si-OH-Gruppen, die ansonsten eine Verstrammung der Siliconkautschuk-Mischung bewirken, chemisch blockiert. Die sogenannte insitu-Hydrophobierung wird mit einer reaktiven siliciumorganischen Verbindung, üblicherweise mit Hexamethyldisilazan durchgeführt.

Zusätzlich kann die Verteilung der Kieselsäure stark beeinflusst werden. Hochdisperse Kieselsäuren weisen eine spezielle Struktur auf (Degussa: Schriftenreihe Pigmente NR. 11, 1993, S. 26). Die Primärteilchen einer Größe zwischen 7 nm und 40 nm, das sog. Primärkorn, sind zu größeren Aggregaten zusammengeballt, die sich wiederum zu noch größeren Strukturen, den Agglomeraten, zusammenlagern.

Zum Erreichen von Produkteigenschaften, welche eine Kombination aus möglichst guter Fließfähigkeit des unvernetzten Siliconkautschuks und gleichzeitig hoher mechanischer Festigkeit des vernetzten Siliconkautschuks darstellen, wie es beispielsweise bei als Abformmaterialien eingesetzten Zwei-Komponenten-Systemen erforderlich ist, muß die Struktur der Kieselsäure möglichst weit abgebaut werden, d. h., es werden geringe Teilchengrößen, möglichst Primärteilchen, im Kautschuk angestrebt. Der Abbau größerer Strukturen erfolgt bekanntermaßen durch den Eintrag von Scherenergie, indem die Mischung aus Polysiloxan und Kieselsäure einer mehr oder weniger starken mechanischen Belastung unterzogen wird.

DE 25 35 334 beschreibt ein Verfahren zur homogenen Verteilung hochdisperser Füllstoffe in Polysiloxanen. Dabei wird der Füllstoff während des Einmischens in das Polymer in-situ-hydrophobiert und die Mischung dann einer mechanischen Behandlung unterzogen. Die mit diesem Verfahren hergestellten Siliconkautschuk-Mischungen sind zwar lagerstabil, weisen jedoch auf Grund ungenügenden Abbaus der agglomerierten Kieselsäureteilchen nicht die für Abformmaterialien erforderlichen Eigenschaften auf.

Für einen effektiven Eintrag von Scherenergie wird in DE 195 07 878 als spezielles Mischaggregat ein Drais-Mischer mit möglichst geringer Spaltbreite beschrieben. Die erreichbare mittlere Teilchengröße beträgt 100 bis 200 nm. Auch bei diesem Verfahren wird der Füllstoff in-situ-hydrophobiert.

Ein extrudierbares Material, bestehend aus Polymer und Füllstoff, wird in DE 44 42 871 beschrieben. Dabei werden 33 bis etwa 65 Gew.-% Füllstoff mit einem Polymer unter Bedingungen relativ hoher Schereinwirkung kombiniert und anschließend unter Beibehaltung der hohen Scherkräfte vermischt. Es werden Teilchengrößen von 100 bis 200 nm erhalten.

Eine weitere Möglichkeit der Erzielung kleiner Kieselsäure-Teilchen ist in EP 622 334 beschrieben Hierbei wird pyrogene Kieselsäure sofort mit einer Teilchengröße zwischen 40 und 200 nm in einem speziellen Verfahren durch Verbrennung eines Chlorsilanes in einem Gemisch aus Sauerstoff, Wasserstoff und gegebenenfalls Stickstoff gewonnen. Die erhaltene Kieselsäure wird dann zur Herstellung von Siliconkautschuk-Mischungen ohne weitere Veränderung ihrer Struktur eingesetzt und in situ hydrophobiert (EP 622 421).

Es sind keine Verfahren zum Deaggregieren von aggregierter und agglomerierter hochdisperser Kieselsäure in Siliconkautschuk-Mischungen beschrieben, in denen die Kieselsäure in der Mischung letztendlich mittlere Teilchengrößen von kleiner 100 nm bis zum Primärkorn aufweist.

Aufgabe der Erfindung war es, ein Verfahren aufzufinden, das es gestattet, hochdisperse Kieselsäuren vollkommen unabhängig von ihren Ausgangs-Strukturen zu verwenden, diese bis zu Teilchengrößen kleiner 100 nm zu deaggregieren und als Füllstoff fiir Siliconkautschuk-Mischungen einzusetzen.

Gegenstand der Erfindung ist ein Verfahren zum Deaggregieren von aggregierter und agglomerierter hochdisperser Kieselsäure.

Ein weiterer Gegenstand der Erfindung sind Siliconkautschuk-Mischungen, bestehend aus Polysiloxan und deaggregierter Kieselsäure einer Teilchengröße kleiner 100 nm, bevorzugt kleiner 50 nm.

Die erfindungsgemäßen Siliconkautschuk-Mischungen können neben Polysiloxan und deaggregierter Kieselsäure weiterhin bekannte und übliche Bestandteile, wie Vernetzer, Weichmacher, Katalysatoren, Haftvermittler, Pigmente, verstärkend wirkende Verbindungen, wie MQ-Siliconharze, sowie andere aktive oder inaktive Füllstoffe, enthalten.

Zum Deaggregieren der Kieselsäure wird erfindungsgemäß eine Mischung aus hochdisperser hydrophiler und/oder hydrophober Kieselsäure (a) und mindestens einer unter Normalbedingungen flüssigen, in Bezug auf die hochdisperse Kieselsäure reaktiven und/oder nichtreaktiven siliciumorganischen Verbindung (b) bei einer Temperatur im Bereich von 20 bis 200 °C und einem Druck, der ausreichend ist, alle Mischungs-Bestandteile in der flüssigen Phase zu belassen, in einem geschlossenen, totraumfreien Mischaggregat mit mindestens einem rotierenden Mischorgan unter Umlaufgeschwindigkeiten größer 3, vorzugsweise größer 5 m/s bis zum Erreichen einer mittleren Teilchengröße kleiner 100 nm mechanisch belastet.

Die Kieselsäure (a) ist bevorzugt zu mindestens 50 Gew.-% in der Gesamt-Mischung aus (a) und (b) enthalten.

Als Kieselsäure können alle bekannten, handelsüblichen pyrogenen und/oder gefällten, hydrophilen und/oder hydrophoben Kieselsäuren verwendet werden, die gegebenenfalls auch Wasser enthalten können. Bevorzugt sind hydrophile pyrogene mit einer BET-Oberfläche größer 50 m²/g.

Die Mischung aus (a) und (b) kann vor der mechanischen Belastung eine nichtfließfähige, aber noch plastische Konsistenz aufweisen. Die Viskosität der Mischung ist abhängig von Menge und Viskosität der verwendeten siliciumorganischen Verbindung und dem Anteil an Kieselsäure. Bei Viskositäten unterhalb 500 Pas sind meist auch ein längerer Zeitraum und/oder wesentlich höhere Umlaufgeschwindigkeiten zum Deaggregieren nicht ausreichend. Es ist vorteilhaft, mindestens so viel siliciumorganische Verbindung (b) einzusetzen, dass die Kieselsäureteilchen benetzt sind.

Die unter Normalbedingungen flüssigen, siliciumorganischen Verbindungen (b) weisen üblicherweise 1 bis 10.000 Si-Atome, bevorzugt 1 bis 5.000 Si-Atome, auf und werden unterschieden hinsichtlich ihres Reaktionsverhaltens gegenüber der hochdispersen Kieselsäure.

In Bezug auf Kieselsäure reaktive Verbindungen sind in der Lage, die vorhandenen OH-Gruppen an der Oberfläche der Kieselsäure zu binden und werden als Behandlungs- oder Hydrophobierungsmittel bezeichnet. Bevorzugt werden siliciumorganische Verbindungen mit 1 bis 2 Si-Atomen verwendet, beispielsweise Silazane, wie Hexamethyldisilazan oder Trialkylsilanole, beispielsweise Trimethylsilanol. Bei Verwendung von Silazanen ist es üblich, in Gegenwart von Wasser zu arbeiten falls die der Kieselsäure anhaftende Feuchtigkeit nicht ausreichend ist. Bei Verwendung der Silanole ist es günstig Silazane oder ein NH₃-Wasser-Gemisch zuzusetzen. Weiterhin können als reaktive Verbindungen kurzkettige Siloxane mit bis zu 10 Si-Atomen und Alkoxy-, Acetoxy-, Chlor- und/oder Hydroxygruppen eingesetzt werden. Speziell bei Verwendung von hydrophiler Kieselsäure ist der Einsatz eines Behandlungsmittels während der mechanischem Belastung von Vorteil.

In Bezug auf Kieselsäure nichtreaktive siliciumorganische Verbindungen können hinsichtlich ihrer Fähigkeit, in Siliconkautschuk-Systemen an Vernetzungsreaktionen teilnehmen zu können, unterschieden werden. Siliciumorganische Verbindungen, welche in den üblichen Vernetzungs-Systemen bei der Herstellung von Siliconkautschuk-Systemen verwendet werden, sind lineare und/oder verzweigte Polyorganosiloxane mit bis zu 5 Mol-% der Organoreste vernetzungsfähige Gruppen und weisen vorzugsweise mehr als 50 Si-Atome und Viskositäten zwischen 1 und 100 Pas auf. Beispiele für vernetzend wirkende Gruppen sind Dimethylhydroxysiloxy-, Dialkoxymethyl-siloxy-Endgruppen in kondensationsvernetzenden Systemen, Dimethylvinylsiloxy- und/oder Hydrogen-Endgruppen und/oder Hydrogen- und/oder Vinyl-Seitengruppen in additionsvernetzenden oder Vinylgruppen in peroxidisch vernetzenden Systemen. Als weitere nicht vernetzend wirkende Gruppen können unter anderem Methyl-, Phenylund/oder Trifluorpropylreste gebunden sein. Als verzweigte Polyorganosiloxane werden flüssige Siloxane eingesetzt, die neben di- und monofunktionellen Siloxy-Einheiten auch tri- und tetrafunktionelle Einheiten aufweisen. Das Verhältnis von tri- und tetrafunktionellen zu monofunktionelle Gruppen wird dabei üblicherweise so gewählt, dass die Polymere Flüssigkeiten darstellen. Sie werden beispielsweise mit dem Ziel, spezielle Fließverhalten in den Elastomeren zu erreichen, verwendet. Es können auch Gemische verschiedener Polyorganosiloxane eingesetzt werden.

Als siliciumorganische Verbindungen (b), welche keine vernetzungsfähigen, speziell keine hydrolysierbaren und damit in Bezug auf die Kieselsäureobefläche nicht reaktiv wirkenden Gruppen aufweisen, werden beispielsweise Hexaalkyldisiloxan, cyclische Dialkylsiloxane mit 3 bis 6 Si-Atomen oder lineare Siloxane einer Viskosität zwischen 0,05 und 1 Pas, bevorzugt Trimethylsilyl-Endgruppen enthaltendes Polydimethylsiloxan, verwendet.

Zum Deaggregieren der hochdispersen Kieselsäure können Gemische von verschiedenen siliciumorganischen Verbindungen eingesetzt werden, bei Einsatz von hydrophiler Kiesesäure ist die Verwendung einer reaktiven siliciumorganischen Verbindung vorteilhaft. So können beispielsweise Gemische von Hexamethyldisilazan mit Hydroxy-Endgruppen enthaltendem Polydimethylsiloxan einer Viskosität von ca. 10 Pas oder mit Vinyl-Endgruppen enthaltendem Polydimethylsiloxan mit Viskositäten von beispielsweise ca. 1 Pas oder 65 Pas, oder mit Trimethylsilyl-Endgruppen enthaltendem Polydimethylsiloxan einer Viskosität von ca. 0,1 Pas oder mit einem hochviskosen Polydimethylsiloxan mit Vinylseitengruppen sowie Gemische aus Hexamethyldisiloxan mit den unterschiedlichsten Polydimethylsiloxanen verwendet werden.

Die Deaggregierung der Kieselsäure kann beispielsweise dadurch erfolgen, dass eine Mischung aus 100 Gew.-Teilen mindestens eines linearen und/oder verzweigten Polyorganosiloxanes, bei welchem bis zu 5 Mol- % der Organoreste vernetzungsfähige Gruppen sind, und 100 bis 300 Gew.-Teilen einer hochdispersen Kieselsäure in einem geschlossenen, totraumfreien Mischaggregat mit mindestens einem rotierenden Mischorgan unter Umlaufgeschwindigkeiten größer 3 m/s, vorzugsweise größer 5 m/s, bei einer Temperatur im Bereich von 20 bis 200 °C, vorzugsweise von 100 bis 150 °C, und einem Druck größer 1 bar, vorzugsweise 5 bis 8 bar, bis zum Erreichen einer mittleren Teilchengröße kleiner 100 nm, vorzugsweise kleiner 20 nm, extrem stark mechanisch belastet wird. Bei Verwendung hydrophiler Kiesesäure werden vor Einarbeitung der Kieselsäure 0,1 bis 75 Gew.-Teile einer zur Oberflächenbehandlung der Kieselsäure geeigneten reaktiven Verbindung, beispielsweise ein Disilazan sowie gegebenenfalls Wasser zugesetzt, wobei die Summe der Gew.-Teile aus in Bezug auf Kieselsäure nichtreaktiver und in Bezug auf Kieselsäure reaktiver siliciumorganischer Verbindung und gegebenenfalls Wasser 100 ist.

Das erfindungsgemäße Verfahren wird durchgeführt mit Hilfe eines mechanisch arbeitenden Mischaggregates, das mit mindestens einem rotierenden Mischorgan ausgestattet ist, wobei die Deaggregierung der Kieselsäure (a) in Gegenwart einer siliciumorganischen Verbindung (b) bei erhöhter Temperatur in einem sog. Zwangs-Mischsystem ohne Totraum erfolgt, was bedeutet, dass der gesamte Mischraum ausgefüllt ist, der Druck im Mischraum oberhalb des atmosphärischen Druckes, vorzugsweise 1 bis 15 bar, bevorzugt 5 bis 8 bar, beträgt und so bemessen ist, dass alle unter Normalbedingungen leichtflüchtigen Mischungs-Bestandteile auch bei erhöhten Temperaturen in der flüssigen Phase verbleiben und das rotierende Mischorgan mit einer Umlaufgeschwindigkeit von mehr als 3 m/s, vorzugsweise von mehr als 5 m/s, arbeitet. Der Zeitraum, der zum Deaggregieren benötigt wird, umfasst wenige Minuten bis mehrere Stunden, üblicherweise 5 Minuten bis 6 Stunden, und ist von den Mischungsbestandteilen, deren Mischungsverhältnis, der Umlaufgeschwindigkeit des Mischorgans und/oder der angestrebten Teilchengröße abhängig. Bei diskontinuierlicher Verfahrensweise werden normalerweise 30 bis 90 Minuten benötigt, bei kontinuierlichem Deaggregieren 1 bis 15 Minuten.

Wesentlich für die erfolgreiche Deaggregierung der Kieselsäure in siliciumorganischen Verbindungen ist ein extrem hoher Eintrag an Dispergierenergie in die Mischung. Diese extreme Beanspruchung kann, was vollkommen überraschend war, in Mischaggregaten mit mechanisch arbeitenden Mischorganen ausgeführt werden, wenn erfindungsgemäß in einem vollständig gefüllten (totraumfreien) Mischraum unter erhöhter Temperatur und Druck bei hohen Umlaufgeschwindigkeiten des Mischorgans gearbeitet wird. Durch die konsequent gleichzeitige Ausnutzung von einem sogenannten Zwangs-Mischsystem und einem schnelldrehenden Mischorgan gelingt es, die Kieselsäureteilchen derart zu deaggregieren, dass Teilchengößen kleiner 100 nm, vorzugsweise kleiner 50 nm, erzielt werden können.

Als bevorzugtes Mischaggregat für das erfindungsgemäße Verfahren wird ein Pressmixer verwendet, welcher mit Mischflügel und einer beweglichen Bodenplatte ausgestattet ist. Geeignet sind jedoch auch alle anderen Mischaggregate, in denen toraumfrei gearbeitet werden kann und mit denen der Eintrag der extrem starken mechanischen Belastung gewährleistet wird. Kontinuierlich ist das erfindungsgemäße Verfahren beispielsweise in Mischaggregaten wie dem 2-Schnecken-Extruder durchführbar.

Nach Erreichen der gewünschten Teilchengröße ist es vorteilhaft, vorhandene oder durch Reaktion gebildete leichtflüchtige Bestandteile aus der Mischung zu entfernen. Die nach der erfindungsgemäßen Verfahrensweise erhaltene hochgefüllte Mischung kann in Abhängigkeit vom späteren Anwendungszweck entweder mit Polyorganosiloxanen verdünnt und/oder als Siliconkautschuk-Mischung gelagert oder gegebenenfalls nach Zusatz weiterer üblicher Mischungsbestandteile zum fertig ausgehärteten Elastomer verarbeitet werden.

Siliconkautschuk-Mischungen, welche die erfindungsgemäß herstellten, deaggregierten Kieselsäuren enthalten, haben gegenüber den herkömmlichen Mischungen den großen Vorteil, dass sie außerordentlich lagerstabil und auch als hochgefüllte Mischungen mit einer guten Fließfähigkeit herstellbar sind. Weiterhin sind in dem erfindungsgemäßen Verfahren alle hochdispersen Kieselsäuren, unabhängig von ihrer Herstellung und Vorbehandlung einsetzbar.

### Ausführungsbeispiele

Alle Viskositätsangaben beziehen sich auf 25 °C.

### Beispiele 1 bis 7

In einem mit einem Rückflußkühler ausgestatteten Labor-Preßmixer mit 10 l Totalinhalt wurden Polydimethylsiloxan (PDMS), Wasser und Hexamethyldisilazan bei Raumtemperatur miteinander vermischt. In diese Mischung wurde schrittweise handelsübliche, unbehandelte, pyrogene Kieselsäure in den Beispielen 1 bis 6 bzw. mit Hexamethyldisilazan behandelte Kieselsäure im Beispiel 7 mit einer BET-Oberfläche von 300 m²/g eingemischt. Durch Erhöhung der Drehzahl des Mischwerkzeuges auf 800 min⁻¹ (Umlaufgeschwindigkeit 10 ms⁻¹) erfolgte ein Anstieg der Mischguttemperatur. Gleichzeitig setzte eine Ammoniakentwicklung ein. Wenn der Druck im Mischraum 9 bar abs. überstieg, wurde das Ammoniakgas über den Rückflußkühler entspannt, wobei die nun zum Verdampfen kommenden Komponenten wie Wasser und Hexamethyldisilazan sowie dessen Spaltprodukte niedergeschlagen und der Mischung wieder zugeführt wurden. Diese Arbeitsweise wurde bei einer Temperatur zwischen 100 und 140 °C während 120 min beibehalten. Danach wurden bei einem Druck von 10 mbar abs. alle flüchtigen Bestandteile aus der Mischung entfernt. Erhalten wurde ein durchsichtiges, plastisches Produkt, welches nach Bedarf schrittweise mit Polysiloxan oder anderen Zuschlagstoffen vermischt werden konnte.

Die verwendeten siliciumorganischen Verbindungen, Kieselsäuren, Hydrophobierungsmittel sowie die eingesetzten Mengen und die erzielten Teilchengrößen enthält Tabelle 1.

### Beispiel 8

Verfahrensweise analog den Beispielen 1 bis 7, mit der Ausnahme, daß eine bereits hydrophobierte pyrogene Kieselsäure mit einer BET-Oberfläche von 260 m²/g verwendet und in das Polysiloxan eingemischt wurde. Es kam auch bei steigender Mischguttemperatur nicht zu einer Ammoniakentwicklung, so dass der Arbeitsschritt der Ammoniakentspannung entfallen konnte. Die Ergebnisse enthält Tabelle 1.

### Beispiel 9

Als Mischaggregat wurde ein zweiwelliger Misch- und Knetreaktor vom Typ CRP 6 eingesetzt, wobei wie in den Beispielen 1 bis 7 verfahren wurde. Die Mischwerkzeuge bewegten sich mit einer Umlaufgeschwindigkeit von 4,5 ms⁻¹. Die Ergebnisse sind in Tabelle 1 enthalten.

### Beispiel 10 (Vergleichsbeispiel)

Als Mischaggregat wurde ein Planetendissolver verwendet. Die Umfangsgeschwindigkeit der beiden Mischwerkzeuge betrug 10 ms⁻¹. Es wurde die Gesamtmenge Polysiloxan vorgelegt, mit Hexamethyldisilazan und Wasser vermischt und die Kieselsäure eingemischt. Es wird nach der gleichen Methode wie bei Versuch 1 bis 7 verfahren, allerdings steht hier kein totraumfreier Mischraum zur Verfügung.

**Tabelle 1**

| Rezepturen und erreichte mittlere Teilchengröße der Kieselsäure: | | | | | | | |
|---|---|---|---|---|---|---|---|
| Beispiel Nr. | Polydimethylsiloxan | | | Kieselsäure [g] | Hexamethyldisilazan [g] | Wasser [g] | mittlere Teilchengröße³ [nm] |
| | Typ¹ | Viskosität [Pas] | Menge [g] | | | | |
| 1 | A | 3,5 | 500 | 632 | 253 | 63 | 25 |
| 2 | A | 3,5 | 500 | 632² | 253 | 63 | 40 |
| 3 | A | 60 | 500 | 632 | 253 | 63 | 20 |
| 4 | B | 2 | 421 | 632 | 253 | 63 | 30 |
| 5 | C | 0,1 | 421 | 632 | 253 | 63 | 40 |
| 6 | D | 1 | 421 | 632 | 253 | 63 | 30 |
| 7 | E | 60000 | 1474 | 632 | 253 | 63 | 20 |
| 8 | A | 3,5 | 500 | 632 | --- | --- | 30 |
| 9 | A | 3,5 | 500 | 632 | 253 | 63 | 35 |
| 10 | A | 3,5 | 1896 | 632 | 253 | 63 | 220 |

| | | | | | | | |
|---|---|---|---|---|---|---|---|
| ¹ Typ A: PDMS mit Dimethylvinylsiloxy-Endgruppen Typ B: PDMS mit Dimethylhydroxy-Endgruppen Typ C: PDMS mit Trimethylsiloxy-Endgruppen Typ D: Gemisch aus Typ B und Typ C im Verhältnis 80:20 (Gewichtsteile) Typ E: PDMS mit Dimethylvinylsiloxy-Endgruppen und 0,05 mol-% Methylvinylsiloxygruppen | | | | | | | |
| ² mit Hexamethyidisilazan vorbehandelte Kieselsäure | | | | | | | |
| ³ gemessen mittels TEM (Transmissionselektronenmikroskopie) | | | | | | | |

Wie aus der Tabelle ersichtlich wird, gelingt die Erzeugung von Kieselsäureteilchen kleiner 100 nm nur, wenn in einem totraumfreien Mischaggregat unter Druck gearbeitet wird und die Umlaufgeschwindigkeit des Mischwerkzeuges mehr als 3 ms⁻¹ beträgt.

## Patentansprüche

1. Verfahren zum Deaggregieren von Kieselsäure, **dadurch gekennzeichnet, dass** eine Mischung aus hochdisperser hydrophiler und/oder hydrophober Kieselsäure (a) und mindestens eine unter Normalbedingungen flüssige, in Bezug auf die hochdisperse Kieselsäure reaktive und/oder nichtreaktive siliciumorganischen Verbindung (b), bei einer Temperatur im Bereich von 20 bis 200 °C und einem Druck, der ausreichend ist, alle Mischungs-Bestandteile in der flüssigen Phase zu belassen, in einem geschlossenen, totraumfreien Mischaggregat mit mindestens einem rotierenden Mischorgan unter Umlaufgeschwindigkeiten größer 3 m/s bis zum Erreichen einer mittleren Teilchengröße kleiner 100 nm mechanisch belastet wird.

2. Verfahren nach Anspruch 1, **dadurch gekennzeichnet, dass** die Mischung bis zum Erreichen einer mittleren Teilchengröße kleiner 50 nm mechanisch belastet wird.

3. Verfahren nach Anspruch 1, **dadurch gekennzeichnet, dass** die Kieselsäure (a) zu mindestens 50 Gew.-% in der Mischung aus (a) und (b) enthalten ist.

4. Verfahren nach Anspruch 1, **dadurch gekennzeichnet, dass** die siliciumorganische Verbindung (b) 1 bis 10.000 Si-Atome aufweist.

5. Verfahren nach Anspruch 1, **dadurch gekennzeichnet, dass** als reaktive siliciumorganische Verbindung (b) Disilazane und/oder Trialkylsilanole eingesetzt werden.

6. Verfahren nach Anspruch 1, **dadurch gekennzeichnet, dass** als reaktive siliciumorganische Verbindung (b) solche mit bis zu 10 Si-Atomen und Alkoxy-, Acetoxy-, Chlor- und/oder Hydroxygruppierungen eingesetzt werden.

7. Verfahren nach Anspruch 1, **dadurch gekennzeichnet, dass** als nichtreaktive siliciumorganische Verbindung (b) lineare und/oder verzweigte Polyorganosiloxane, bei welchen bis zu 5 Mol-% der Organoreste vernetzungsfähige Gruppen sind, eingesetzt werden.

8. Verfahren nach Anspruch 7, **dadurch gekennzeichnet, dass** Polyorganosiloxane einer Viskosität von 1 bis 100 Pas eingesetzt werden.

9. Verfahren nach Anspruch 7, **dadurch gekennzeichnet, dass** lineare Polyorganosiloxane mit Dimethylhydroxysiloxy-, Dialkoxymethylsiloxy-, Dimethylhydrogensiloxy- und/oder Dimethylvinylsiloxy-Endgruppen und/oder Hydrogen- und/oder Vinyl-Seitengruppen eingesetzt werden.

10. Verfahren nach Anspruch 1, **dadurch gekennzeichnet, dass** als nichtreaktive siliciumorganische Verbindung (b) lineare und/oder cyclische siliciumorganische Verbindungen ohne vernetzungsfähige Gruppen eingesetzt werden.

11. Verfahren nach Anspruch 10, **dadurch gekennzeichnet, dass** als nichtreaktive siliciumorganische Verbindung (b) Hexaalkyldisiloxan, Octaalkyltrisiloxan und/oder ein oder mehrere cyclische Dialkylsiloxane mit 3 bis 6 Si-Atomen eingesetzt werden.

12. Verfahren nach Anspruch 10, **dadurch gekennzeichnet, dass** als nichtreaktive siliciumorganische Verbindung (b) solche mit einer Viskosität zwischen 0,05 und 1,00 Pas eingesetzt werden.

13. Verfahren nach Anspruch 10, **dadurch gekennzeichnet, dass** als hochdisperse Kieselsäure (B) hydrophobe und/oder hydrophile, pyrogene und/oder gefällte Kieselsäure mit einer BET-Oberfläche größer 50 m²/g verwendet wird.

14. Verwendung von deaggregierter Kieselsäure nach Anspruch 1 als Füllstoff in Siliconkautschuk-Mischungen.

## Claims

1. Process for the desaggregation of silica, **characterised in that** a mixture of highly dispersed hydrophilic and/or hydrophobic silica (a) and at least one organosilicon compound (b) that is liquid under normal conditions and is reactive and/or non-reactive relative to the highly dispersed silica is subjected to a mechanical load, at a temperature in the range of from 20 to 200°C and a pressure sufficient to maintain all the constituents of the mixture in the liquid phase, in a closed mixing unit without dead space and having at least one rotating mixing member, at rotational speeds of greater than 3 m/s, until a mean particle size of less than 100 nm is achieved.

2. Process according to claim 1, **characterised in that** the mixture is subjected to a mechanical load until a mean particle size of less than 50 nm is achieved.

3. Process according to claim 1, **characterised in that** the silica (a) is contained in an amount of at least 50 wt.% in the mixture of (a) and (b).

4. Process according to claim 1, **characterised in that** the organosilicon compound (b) has from 1 to 10,000 Si atoms.

5. Process according to claim 1, **characterised in that** disilazanes and/or trialkylsilanols are used as the reactive organosilicon compound (b).

6. Process according to claim 1, **characterised in that** there are used as the reactive organosilicon compound (b) those having up to 10 Si atoms and alkoxy, acetoxy, chlorine and/or hydroxy groupings.

7. Process according to claim 1, **characterised in that** there are used as the non-reactive organosilicon compound (b) linear and/or branched polyorganosiloxanes in which up to 5 mol% of the organo radicals are crosslinkable groups.

8. Process according to claim 7, **characterised in that** polyorganosiloxanes having a viscosity of from 1 to 100 Pas are used.

9. Process according to claim 7, **characterised in that** linear polyorganosiloxanes having dimethylhydroxysiloxy, dialkoxymethylsiloxy, dimethylhydrogensiloxy and/or dimethylvinylsiloxy end groups and/or hydrogen and/or vinyl side groups are used.

10. Process according to claim 1, **characterised in that** there are used as the non-reactive organosilicon compound (b) linear and/or cyclic organosilicon compounds without crosslinkable groups.

11. Process according to claim 10, **characterised in that** there is used as the non-reactive organosilicon compound (b) hexaalkyldisiloxane, octaalkyltrisiloxane and/or one or more cyclic dialkylsiloxanes having from 3 to 6 Si atoms.

12. Process according to claim 10, **characterised in that** there are used as the non-reactive organosilicon compound (b) those having a viscosity of from 0.05 to 1.00 Pas.

13. Process according to claim 10, **characterised in that** there is used as the highly dispersed silica (B) hydrophobic and/or hydrophilic, pyrogenic and/or precipitated silica having a BET surface area greater than 50 m²/g.

14. Use of desaggregated silica according to claim 1 as a filler in silicone rubber mixtures.

## Revendications

1. Procédé de désagrégation de silice,
**caractérisé en ce qu'**
on exerce une sollicitation mécanique sur un mélange de silice hautement dispersée et/ou hydrophobe (a) et d'au moins un composé d'organo-silicium (b) liquide dans les conditions normales, réactif et/ou non réactif par rapport à la silice hautement dispersée à une température allant de 20 à 200°C et à une pression qui est suffisante pour laisser tous les constituants du mélange en phase liquide, dans un appareil fermé, dépourvu d'espace mort, avec au moins un organe de mélange en rotation avec des vitesses de rotation supérieures à 3 m/s jusqu'à obtention d'une taille particulaire moyenne inférieure à 100 nm.

2. Procédé selon la revendication 1,
**caractérisé en ce qu'**
on exerce une sollicitation mécanique sur le mélange jusqu'à obtention d'une taille particulaire moyenne inférieure à 50 nm.

3. Procédé selon la revendication 1,
**caractérisé en ce que**
la silice (a) est contenue à au moins 50 % en poids dans le mélange constitué de (a) et de (b).

4. Procédé selon la revendication 1,
**caractérisé en ce que**
le composé d'organo-silicium (b) présente de 1 à 10 000 atomes de Si.

5. Procédé selon la revendication 1,
**caractérisé en ce qu'**
on utilise comme composé d'organo-silicium réactif (b) des disilazanes et/ou des trialkylsilanols.

6. Procédé selon la revendication 1,
**caractérisé en ce qu'**
on utilise comme composé d'organo-silicium (b) des composés comportant jusqu'à 10 atomes de Si et des groupements alcoxy, acétoxy, chlore et/ou hydroxy.

7. Procédé selon la revendication 1,
**caractérisé en ce qu'**
on utilise comme composé d'organo-silicium non réactif (b) des polyorganosiloxanes linéaires et/ou ramifiés, dans lesquels jusqu'à 5 % molaire des radicaux organiques sont des groupes aptes à la réticulation.

8. Procédé selon la revendication 7,
**caractérisé en ce qu'**
on utilise des polyorganosiloxanes d'une viscosité de 1 à 100 Pas.

9. Procédé selon la revendication 7,
**caractérisé en ce qu'**
on utilise des poolyorganosiloxanes ayant des groupes d'extrémité diméthylhydroxy siloxy, dialcoxyméthyl siloxy, diméthylhydrogénosiloxy et/ou diméthyl vinyl siloxy et/ou des groupes latéraux hydrogène et/ou vinyle.

10. Procédé selon la revendication 1,
**caractérisé en ce qu'**
on utilise comme composé d'organo-silicium non réactif (b) des composés d'organo-silicium linéaire et/ou cyclique sans groupes aptes à la réticulation.

11. Procédé selon la revendication 10,
**caractérisé en ce qu'**
on utilise comme composé d'organo-silicium non réactif (b) un hexaalkyidisiloxane, un octaalkyltrisiloxane et/ou un ou plusieurs dioctyl-siloxanes cycliques comportant de 3 à 6 atomes de Si.

12. Procédé selon la revendication 10,
**caractérisé en ce qu'**
on utilise comme composé d'organo-silicium (b) un composé ayant une viscosité comprise entre 0,05 et 1,00 Pas.

13. Procédé selon la revendication 10,
**caractérisé en ce qu'**
on utilise comme silice hautement dispersée (B) une silice hydrophobe et/ou hydrophile, pyrogène et/ou précipitée ayant une surface BET supérieure à 50 m²/g.

14. Utilisation de silice désagrégée selon la revendication 1, comme charge dans un des mélanges de caoutchouc de silicium.
